# EUROPÄISCHE PATENTSCHRIFT

(11) **EP 3 768 918 B1**
(45) Veröffentlichungstag und Bekanntmachung des Hinweises auf die Patenterteilung: **03.01.2024**
(21) Anmeldenummer: 19712951.3
(22) Anmeldetag: 19.03.2019
(51) Int. Cl.: E04G 21/04, F16L 3/00, B65G 53/42, F16L 21/00

(54) **BETONPUMPE MIT ENDSCHLAUCHHALTER UND VERFAHREN ZUR MONTAGE EINES ENDSCHLAUCHHALTERS**
CONCRETE PUMP WITH AN END TUBE HOLDER AND METHOD FOR MOUNTING AN END TUBE HOLDER
POMPE À BÉTON AVEC UN SUPPORT D'UN TUYAU D'EXTREMITE ET PROCÉDÉ DE MONTAGE D'UN SUPPORT D'UN TUYAU D'EXTREMITE

(30) Priorität: 22.03.2018 DE 102018106758
(43) Veröffentlichungstag der Anmeldung: 27.01.2021
(73) Patentinhaber: Putzmeister Engineering GmbH, 72631 Aichtal (DE)
(72) Erfinder: MAYER, Martin, 72768 Reutlingen (DE)
(74) Vertreter: Glawe, Delfs, Moll
(86) Internationale Anmeldenummer: PCT/EP2019/056756
(87) Internationale Veröffentlichungsnummer: WO 2019/179970

(56) Entgegenhaltungen:
- EP-A2- 1 967 671
- CN-U- 203 213 615
- CN-U- 204 729 772
- DE-A1-102014 005 100

## Beschreibung

Die Erfindung betrifft, eine Betonpumpe mit einem Endschlauchhalter für Verteilermasten von Betonpumpen sowie ein Verfahren zu deren Herstellung.

Betonpumpen verfügen regelmäßig über einen auf einem fahrbaren oder stationären Unterbau drehbar angeordneten Ausleger mit einer daran entlanggeführten Förderleitung, durch die fließfähiger Beton gepumpt werden kann. Der Ausleger umfasst dabei mehrere Auslegerarme, die um Schwenkachsen jeweils quer zur Längsrichtung der Auslegerarme relativ zueinander verschwenkt werden können. Am Ende des Auslegers mündet die Förderleitung regelmäßig in einem Endschlauch zur Verteilung des durch die Förderleitung geförderten Betons in die dafür vorgesehene Schalung.

Die Förderleitung und der Endschlauch weisen im betonführenden Zustand ein nicht unerhebliches Eigengewicht auf, welches bei der Auslegung des Auslegers berücksichtigt werden muss. Im Gegenzug ist die maximale Länge des Endschlauchs begrenzt, damit das Gewicht des Endschlauchs mit darin enthaltenem Beton einen sich aus der Auslegung ergebenden Maximalwert nicht überschreitet. Üblich ist ein Maximalgewicht für den Endschlauch von 200 kg. Bei typischen Durchmessern ist die Länge des Endschlauchs daher üblicherweise auf 4 m beschränkt, wodurch auch eine Handführung des Endschlauchs möglich ist.

Auf Baustellen sind immer wieder Aufgaben zu bewältigen, die ein tiefes Eintauchen der Förderleitung in Schalungen erfordern, wofür ein üblicher Endschlauch nicht ausreicht. Gleichzeitig wird für diese Aufgaben der Auslegerarm aber häufig nicht in seiner gesamten Länge benötigt.

Im Stand der Technik ist es für solche Situationen daher grundsätzlich bekannt, anstelle eines ersten Endschlauchs an der Spitze des Auslegers wahlweise einen zweiten Endschlauch an einem Anschlagpunkt im Bereich des Gelenks zwischen dem letzten und dem vorletzten Auslegerarm zu befestigen, womit dieser zweite Endschlauch eine größere Länge aufweisen kann, ohne aufgrund seines Eigengewichtes im mit Beton gefüllten Zustand den Ausleger zu überlasten.

Um den zweiten Endschlauch, wie beschrieben, anzubringen, wurde ein 90°-Rohrbogen der Förderleitung im Bereich des Gelenks zwischen dem letzten und vorletzten Auslegearm einseitig gelöst und so nach unten verschwenkt, dass an dem freien Ende ein Endschlauch befestigt werden konnte. Auch, um ein grundsätzliches Bewegen des Auslegers weiter zu ermöglichen, muss dabei das andere Ende des Rohrbogens derart fest gelagert sein, dass die Schwenkachse des Rohrbogens auch unter Belastung quer zur Längsrichtung der beiden letzten Auslegerarme ausgerichtet bleibt. Eine entsprechende Lagerung des fraglichen Rohrbogens ist nur bei einigen Betonpumpen gegeben.

Bei anderen Konstruktionen von Betonpumpen sind - bspw. um den Ausleger aus Transportgründen möglichst kompakt zusammenlegen zu können - die Rohrbögen im Bereich eines Gelenkes zwischen zwei Auslegerarmen nicht ausreichend fest gelagert, um das beschriebene Verschwenken eines Rohrbogens zur Anbindung eines Endschlauches zu ermöglichen. In der Folge ist es gemäß dem Stand der Technik bei solchen Betonpumpen nicht möglich, einen Endschlauch an einer anderen Position, als der Spitze des Auslegers anzubringen.

Das Dokument DE 10 2013 107 780 B3 offenbart eine Kupplung für Rohre, bei der die Rohre jeweils gegenüber der Kupplung festgelegt sind und sich somit auch nicht zueinander verschwenken lassen. In Dokument WO 2014/108055 A1 ist eine Rohrweiche für die Förderleitung einer Betonpumpt offenbart, bei der ein S-förmiger Rohrabschnitt schwenkbar gelagert ist, um wahlweise mit zwei Rohrabschnitten verbunden zu werden.

Das Dokument CN 203 213 615 U betrifft ein Mastsegment einer mobilen Betonpumpe, das ein Gehäuse zur Durchleitung von flüssigem Beton aufweist. Das Gehäuse besteht aus einem Übergabeabschnitt und einem zur Durchleitung von Beton ausgebildeten Körper. Am stromabwärtigen Ende des Gehäuses befindet sich ein Auslasskanal, der zwei mittels einer Schalenkupplung verbundene Rohrbögen aufweist.

Das Dokument CN 204 729 772 U beschreibt einen Rohrverbinder zur Kupplung eines Endschlauchs mit einem Auslegerrohr. Dazu ist eine Anordnung mit einer Schelle zur Befestigung des Endschlauchs vorgesehen, an dem der Endschlauch auf einem Sitz positioniert werden kann.

Aus dem Dokument DE 10 2014 005100 A1 ist eine Endschlauchhalterung bekannt, bei der der Endschlauch über eine Kupplung mit dem letzten Betonleitungssegment befestigt ist, die mit einem am letzten Mastsegment ("Flieger") angeordneten, rotatorisch verschwenkbaren Haltemittel verbunden ist.

Das Dokument EP 1 967 671 A2 betrifft eine Stützvorrichtung für eine Betonleitung am äußersten Arm eines Auslegers einer Betonpumpe, bei der eine rotatorische Bewegung der Betonleitungssegmente relativ zueinander möglich ist.

Aufgabe der vorliegenden Erfindung ist es, eine Möglichkeit zu schaffen, um auch bei Betonpumpen ohne feste Lagerung der Rohrbögen der Förderleitung im Bereich eines Gelenks zwischen zwei Auslegerarmen einen Endschlauch befestigen zu können.

Gelöst wird diese Aufgabe durch eine Betonpumpe gemäß dem Hauptanspruch, sowie das Verfahren gemäß Anspruch 8.

Demnach betrifft die Erfindung eine Betonpumpe umfassend einen Verteilermast mit mehreren jeweils relativ zueinander verschwenkbaren Auslegerarmen, an denen eine Betonförderleitung entlanggeführt wird, wobei in den Gelenkbereichen die Betonförderleitung derart durch Betonleitungssegmente gebildet ist, dass die Drehachse einer, die Betonleitungssegmente verbindende Schalenkupplung senkrecht zur Längsachse der Auslegerarme ausgerichtet ist, wobei in einem Gelenkbereich ein Endschlauchhalter für Verteilermasten von Betonpumpen zur Schaffung eines Anschlagpunktes für einen Endschlauch umfassend eine mit ihrem Fuß an einem Trägerelement befestigte Fußschalenkupplung zur Rohrdrehverbindung zweier Betonleitungssegmente, wobei das Trägerelement einen zur Kupplungsverbindung mit einem Betonleitungssegment ausgebildeten Flansch aufweist, dessen relative Lage gegenüber der Fußschalenkupplung einem vorgegebenen Betonleitungssegment entspricht, angeordnet ist, dessen Fußschalenkupplung die Schalenkupplung mit senkrecht zur Längsachse der Auslegerarme ausgerichtete Drehachse bildet und dessen Flansch mit einem Betonleitungssegment an dem der Spitze des Verteilermastes näherliegenden, den Gelenkbereich bildenden Auslegerarm verbunden ist.

Des Weiteren wird ein Endschlauchhalter für Verteilermasten von Betonpumpen zur wahlweisen Schaffung eines Anschlagpunktes für einen Endschlauch offenbart, umfassend eine mit ihrem Fuß an einer Halterung befestigte Fußschalenkupplung zur Rohrdrehverbindung zweier Betonleitungssegmente, wobei die Halterung einen zur Kupplungsverbindung mit einem Betonleitungssegment ausgebildeten Flansch aufweist, dessen relative Lage gegenüber der Schalenkupplung einem vorgegebenen Betonleitungsrohrbogen entspricht.

Die Erfindung betrifft auch ein Verfahren zur Montage eines Endschlauchhalters für Verteilermasten von Betonpumpen zur Schaffung eines Anschlagpunktes für einen Endschlauch umfassend eine mit ihrem Fuß an einem Trägerelement befestigte Fußschalenkupplung zur Rohrdrehverbindung zweier Betonleitungssegmente, wobei das Trägerelement einen zur Kupplungsverbindung mit einem Betonleitungssegment ausgebildeten Flansch aufweist, dessen relative Lage gegenüber der Fußschalenkupplung einem vorgegebenen Betonleitungssegment entspricht, an einer Betonpumpe zur Herstellung einer erfindungsgemäßen Betonpumpe umfassend einen Verteilermast mit mehreren jeweils relativ zueinander verschwenkbaren Auslegerarmen, an denen eine aus mehreren, über Schalenkupplungen miteinander verbundene Betonleitungssegmente gebildete Betonförderleitung entlanggeführt ist, mit den Schritten:
- Lösen der Schalenkupplung zu beiden Seiten des durch den Endschlauchhalter zeitweise zu ersetzenden Betonleitungssegments und Entfernen des Betonleitungssegments sowie einer der beiden Schalenkupplungen; und
- Einsetzen des Endschlauchhalters, Verbinden des Endschlauchhalters sowohl mit dem einen, zum entfernten Betonleitungssegments ursprünglich benachbarten Betonleitungssegment über die Fußschalenkupplung des Endschlauchhalters als auch mit dem anderen, zum entfernten Betonleitungssegments ursprünglich benachbarten Betonleitungssegment über den Flansch des Endschlauchhalters und der verbliebenen Schalenkupplung.

Zunächst werden einige in Zusammenhang mit der Erfindung verwendete Begriffe erläutert.

Mit "Gelenkbereich" ist derjenige Bereich zwischen zwei benachbarten Auslegerarmen des Verteilermastes einer Betonpumpe bezeichnet, in dem die beiden Auslegerarme schwenkbar miteinander verbunden sind. Sämtliche sich über diesen Bereich erstreckende Komponenten und Leitungen des Verteilermastes, insbesondere auch die Betonförderleitung, müssen geeignet ausgebildet sein, um die für den Gelenkbereich vorgesehene Schwenkbewegung nicht zu behindern.

Bei einer "Schalenkupplung" handelt es sich um eine für Betonförderleitungen verbreitetes Element zur Rohrdrehverbindung, bei der an den zu verbindenden Betonleitungssegmente angeordnete und auf Stoß liegende Rohrflansche derart umgriffen werden, dass lediglich eine Rotationsbewegung der beiden Betonleitungssegmente um die gemeinsame Achse der Rohrflansche möglich ist.

Weist eine solche Schalenkupplung einen zur Befestigung der Kupplung an einem weiteren Bauteil ausgebildeten Fuß auf, handelt es sich um eine "Fußschalenkupplung". Die Fußschalenkupplung kann dazu bspw. eine fest mit der Kupplung verbundene Montageplatte mit Durchgangslöchern zur Verschraubung oder Sacklöcher mit Innengewinde im Kupplungsgehäuse aufweisen.

Beispiele für Schalenkupplungen sowohl mit als auch ohne Fuß sind in DE 10 2011 077 346 A1 gezeigt.

Mit "Betonleitungsrohrbogen" ist ein als Betonleitungssegment zur Durchleitung von fließfähigem Beton geeigneter Rohrbogen bezeichnet, der in Verwendung beidseitig mit benachbarten Segmenten einer Betonleitung verbunden ist. Ein entsprechender Betonleitungsrohrbogen kann bspw. einen Biegewinkel von 90° aufweisen.

Der Erfindung liegt die Erkenntnis zugrunde, dass auch bei Konstruktionen ohne feste Lagerung der Betonförderleitung im Gelenkbereich eines Auslegerarms regelmäßig jeweils zwei in diesem Bereich über eine Schalenkupplung miteinander verbundene Betonleitungssegmente - in der Regel Betonleitungsrohrbögen - eine gemeinsame Kupplungsachse aufweisen, die unabhängig vom Ausfahrzustand des Verteilermastes dauerhaft quer zur Längsrichtung der Auslegerarme verläuft. Die Lage der Kupplungsachse wird dabei allein durch die Geometrie der in diesem Bereich angeordneten und miteinander drehkupplungsverbundenen Betonleitungssegmente erreicht, ohne dass ein festes Lager zwischen den beiden fraglichen Betonleitungssegmenten erforderlich wäre.

Basierend auf dieser Erkenntnis sieht die Erfindung einen Endschlauchhalter vor, der auf der einen Seite eine Fußschalenkupplung zum wahlweise Ersetzen einer im Gelenkbereich vorgesehenen ersten Schalenkupplung und an seiner anderen Seite einen Flansch zur Befestigung mit einer zweiten im Gelenkbereich vorgesehenen Schalenkupplung aufweist, sodass der Endschlauchhalter eine strukturelle Verbindung zwischen zwei ansonsten durch ein anderes Betonleitungssegment verbundenen Betonleitungssegmenten schafft. Durch den Endschlauchhalter kann so die Kinematik der übrigen Betonleitungssegmente im Gelenkbereich unverändert aufrechterhalten werden, da es die benachbarten Betonleitungssegmente wie ein tatsächliches anderes Betonleitungssegment miteinander verbindet.

Gleichzeitig kann das durch den Endschlauchhalter "ersetzte" oder ein anderes Betonleitungssegment mit seinem einen Ende an der Fußschalenkupplung des Endschlauchhalters an die Förderleitung angebunden werden. Die Lage der Fußschalenkupplung ist - wie dargelegt - vollständig durch den Endschlauchhalter definiert, während das Betonleitungssegment gegenüber der Fußschalenkupplung verschwenkbar ist. An dem anderen Ende des so angebundenen Betonleitungssegments kann ein Endschlauch vorgesehen werden, ohne dass dessen Eigengewicht zu unerwünschten Bewegungen des Endschlauchhalters führen würde. Die Gewichtskräfte werden vielmehr über den Endschlauchhalter, die damit verbundenen Betonleitungssegmente und deren Rohrhalter in die Auslegerarme zu beiden Seiten des Gelenkbereichs eingeleitet.

Um eine einfache Montage des Endschlauchhalters und dessen letztendlicher Funktionsweise sicherzustellen, ist vorgesehen, dass die relative Lage zwischen Fußschalenkupplung und Flansch einem vorgegebenen Betonleitungssegment entspricht. Damit wird zum Ausdruck gebracht, dass der Endschlauchhalter zum zeitweise Ersetzen eines Betonleitungssegments sowie einer Schalenkupplung zur Anbindung dieses Betonleitungssegments ausgebildet ist und sich ohne Weiteres zwischen die zu dem zeitweise zu ersetzenden Betonleitungssegment benachbarten Betonleitungssegmente einfügen lässt.

Bei dem "vorgegebenen Betonleitungssegment" handelt es sich also um dasjenige Betonleitungssegment, welches zeitweise durch den Endschlauchhalter ersetzt werden soll. Das fragliche Betonleitungssegment lässt sich im Vorwege festlegen. Weiterhin sind die Dimensionierung und sonstige Ausgestaltung des Betonleitungssegments bekannt, sodass der Endschlauchhalter - insbesondere im Hinblick auf die relative Lage zwischen Fußschalenkupplung und Flansch - entsprechend ausgestaltet werden kann.

Bei dem vorgegebenen Betonleitungssegment handelt es sich vorzugsweise um einen Betonleitungsrohrbogen, weiter vorzugsweise um einen Betonleitungsrohrbogen mit einem Biegewinkel von 90°. Im Gelenkbereich von Betonpumpen-Verteilermasten ist die Betonförderleitung in der Regel aus Betonleitungsrohrbögen gebildet. Eine daran angepasste Ausgestaltung des Endschlauchhalters ermöglicht einen breiten Anwendungsbereich, insbesondere wenn es sich bei dem vorgegebenen Betonleitungssegment um ein Norm- oder Standardbauteil handelt, welches bei unterschiedlichen Betonpumpen verwendet wird.

Es ist bevorzugt, wenn die Fußschalenkupplung und der Flansch an Betonleitungssegmente mit einer Nennweite von (DN) 100 mm oder 125 mm, vorzugsweise gemäß DIN 24118:2007-03, angepasst sind. Betonleitungssegmente mit entsprechender Nennweite haben typische Maße für Außendurchmesser und Rohrflanschdurchmesser, sodass eine Anpassung von Fußschalenkupplung und Flansch des Endschlauchhalters daran eine problemlose Verwendung gewährleistet.

Der Flansch kann durch einen Anschweißbund gebildet sein, bei dem es sich vorzugsweise um ein Normteil handelt. Weiterhin ist bevorzugt, wenn der Anschweißbund auf einem Trägerelement, bspw. einer Trägerplatte, befestigt ist, an der auch die Schalenkupplung mit ihrem Fuß unmittelbar befestigt ist. Bei einer entsprechenden Konfiguration ist eine einfache und kostengünstige Herstellung des Endschlauchhalters möglich.

Bei der erfindungsgemäßen Betonpumpe ist ein Endschlauchhalter derart angeordnet, dass die Drehachse seiner Schalenkupplung mit Fuß grundsätzlich senkrecht zur Länge der Auslegerarme ausgerichtet ist. Dies ermöglicht eine gute Anbindbarkeit für einen Endschlauch.

Es ist bevorzugt, wenn dasjenige Betonleitungssegment, welches durch den Endschlauchhalter zeitweise ersetzt ist, mit seinem einen Ende an der Schalenkupplung mit Fuß des Endschlauchhalters befestigt und am anderen Ende mit einem Endschlauch verbunden ist. Insbesondere wenn das fragliche Betonleitungssegment ein Betonleitungsrohrbogen mit Biegewinkel 90° ist, ist sichergestellt, dass der daran befestigte Endschlauch bei nahezu beliebiger Stellung des Verteilermastes senkrecht nach unten weisen kann.

Der Endschlauchhalter ist vorzugsweise in dem Gelenkbereich angeordnet, der durch den auch die Spitze des Verteilermastes bildenden Auslegerarm mitgebildet wird. In anderen Worten soll der Endschlauchhalter - und damit auch der Endschlauch - am äußersten Gelenkbereich des Verteilermastes angeordnet sein.

Bei der Betonpumpe handelt es sich bevorzugt um eine mobile Betonpumpe.

Das erfindungsgemäße Verfahren betrifft die Montage einer erfindungsgemäßen Betonpumpe. Zur Erläuterung des Verfahrens wird auf die vorstehenden Ausführungen verwiesen.

Die Erfindung wird nun anhand eines vorteilhaften Ausführungsbeispiels unter Bezugnahme auf die beigefügten Zeichnungen beispielhaft beschrieben. Es zeigen:
- Figur 1:: eine schematische Darstellung einer mobilen Betonpumpe;
- Figur 2a, b:: eine schematische Darstellung eines Endschlauchhalters; und
- Figur 3:: eine schematische Darstellung der Verwendung des Endschlauchhalters aus Figur 2 an der Betonpumpe aus Figur 1.

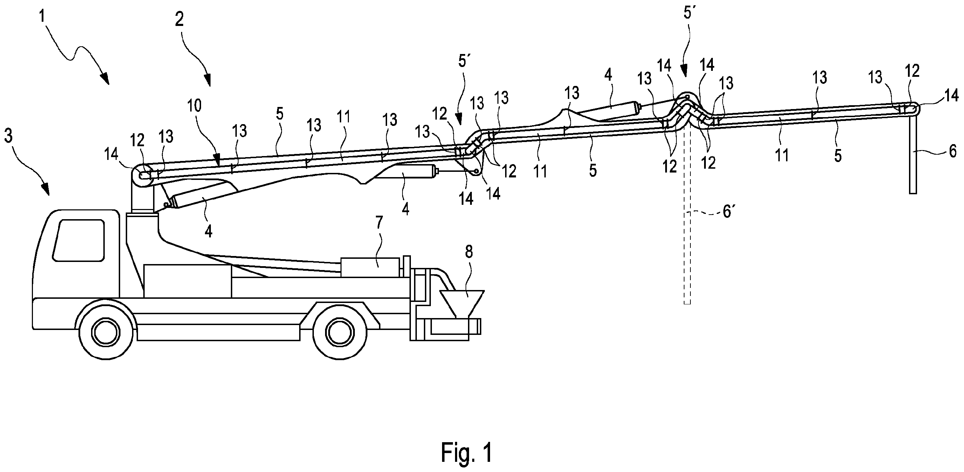

Bei der in Figur 1 dargestellten mobilen Betonpumpe 1 mit Verteilermast 2 handelt es sich um eine Autobetonpumpe, bei dem der Verteilermast 2 auf einem fahrbaren Unterbau 3 befestigt ist. Der Verteilermast 2 ist - wie dargestellt - aufklappbar und umfasst dazu mehrere, durch Hydraulikzylinder 4 relativ zueinander verschwenkbare Auslegerarme 5, in denen eine Förderleitung 10 für fließfähigen Beton geführt ist, die in einem ersten Endschlauch 6 am Ende des Verteilermastes 2 mündet. Mithilfe einer am Unterbau 3 angeordneten Kernpumpe 7 kann fließfähiger Beton vom Aufgabetrichter 8 durch die Förderleitung 10 bis zum freien offenen Ende des Endschlauchs 6 gefördert werden.

Die Förderleitung 10 ist aus mehreren Betonleitungssegmenten 11 gebildet. Die einzelnen Betonleitungssegmente 11 sind über Schalenkupplungen 12 miteinander drehverbunden. Neben lang gestreckten geraden sowie leicht gebogenen Betonleitungssegmenten 11, die über Rohrhalter 13 an dem jeweils benachbarten Auslegerarm 5 befestigt sind, sind im Gelenkbereich 5' zwischen zwei Auslegerarmen 5 zwei über eine gemeinsame Schalenkupplung 12 (in Figur 1 nicht sichtbar) verbundene Betonleitungsrohrbögen 14 mit 90° Biegewinkel vorgesehen, wobei die Drehachse dieser Schalenkupplung 12 mit der gemeinsamen Schwenkachse der beiden Auslegerarme 5 zusammenfällt.

In einigen Anwendungsfällen ist gewünscht, anstelle des ersten Endschlauchs 6 am äußersten Ende des Verteilermastes 2 einen gegenüber dem ersten Endschlauch 6 längeren zweiten Endschlauch 6' an dem durch den äußersten Auslegerarm 5 mitgebildeten Gelenkbereich 5' vorzusehen. Bei Betonpumpen 1, wie der dargestellten, bei der sämtliche Schalenkupplungen 12 im Gelenkbereich ohne Fuß ausgestaltet sind, ist dies gemäß dem Stand der Technik jedoch nicht möglich.

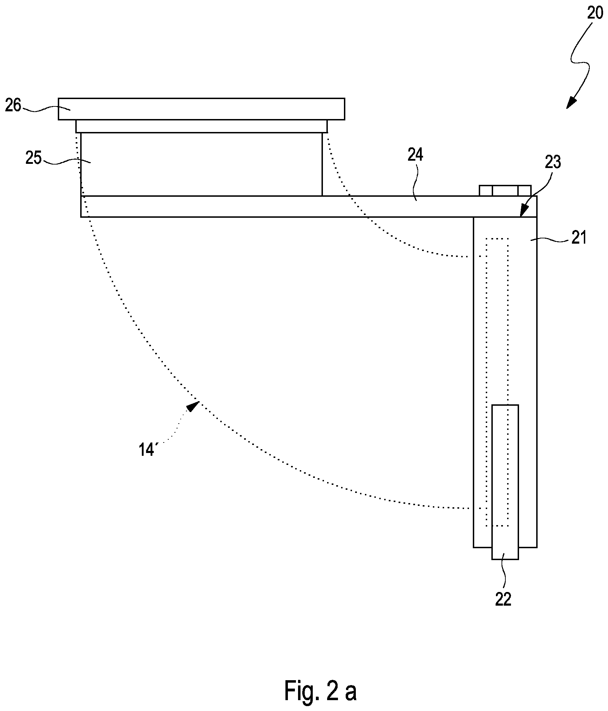

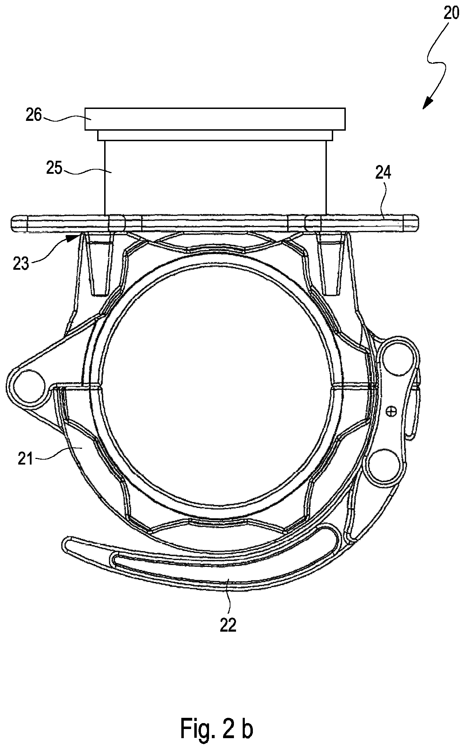

In Figur 2 ist ein Endschlauchhalter 20 dargestellt, mit dem der zweite Endschlauch 6' gemäß Figur 1 dennoch montiert werden kann. Dabei zeigt Figur 2a eine schematische Draufsicht auf den Endschlauchhalter 20, während in Figur 2b eine Seitenansicht desselben dargestellt ist.

Der Endschlauchhalter 20 umfasst eine Fußschalenkupplung 21 zur Rohrdrehverbindung zweier Betonleitungssegmente 11, insbesondere zweier Betonleitungsrohrbögen 14. Die Fußschalenkupplung 21 ist gemäß dem Stand der Technik - bspw. der DE 10 2011 077 346 A1 - ausgestaltet und verfügt über einen Hebel 22 zum einfachen Öffnen und Schließen Fußschalenkupplung 21. Mit ihrem Fuß 23 ist die Fußschalenkupplung 21 auf einem als Trägerplatte ausgebildeten Trägerelement 24 befestigt. Auf dem Trägerelement 24 ist außerdem ein Anschweißbund 25 angeordnet, der an seinem freien Ende einen Flansch 26 aufweist.

Der Endschlauchhalter 20 ist so konstruiert, dass die relative Lage der Fußschalenkupplung 21 zum Flansch 26 einem Betonleitungsrohrbogen 14 der Förderleitung 11 der Betonpumpe 10 entspricht. Nimmt man also gedanklich einen entsprechenden Betonleitungsrohrbogen 14' an, dessen eine Ende mit dem Flansch 26 zusammenfällt, liegt das andere Ende des gedanklichen Betonleitungsrohrbogens 14' so in der Fußschalenkupplung 21, dass es durch diese mit einem weiteren Betonleitungssegment 11 verbunden werden kann. Dieser gedankliche Betonleitungsrohrbogen 14' ist in Figur 2a durch eine punktierte Linie angedeutet.

Sowohl die Fußschalenkupplung 21 als auch der Flansch 26 sind in ihre Dimensionierung an Betonleitungssegmente mit einer Nennweite von (DN) 125 mm angepasst. Dadurch lässt sich ein Betonleitungsrohrbogen 14 der Förderleitung 11 der Betonpumpe 10 aus Figur 1 ohne Weiteres zeitweise durch den Endschlauchhalter 20 ersetzen, wobei eine der beiden Schalenkupplung 12, die den zu ersetzenden Betonleitungsrohrbogen 14 gehalten hat, in dieser Zeit von der Fußschalenkupplung 21 ersetzt wird.

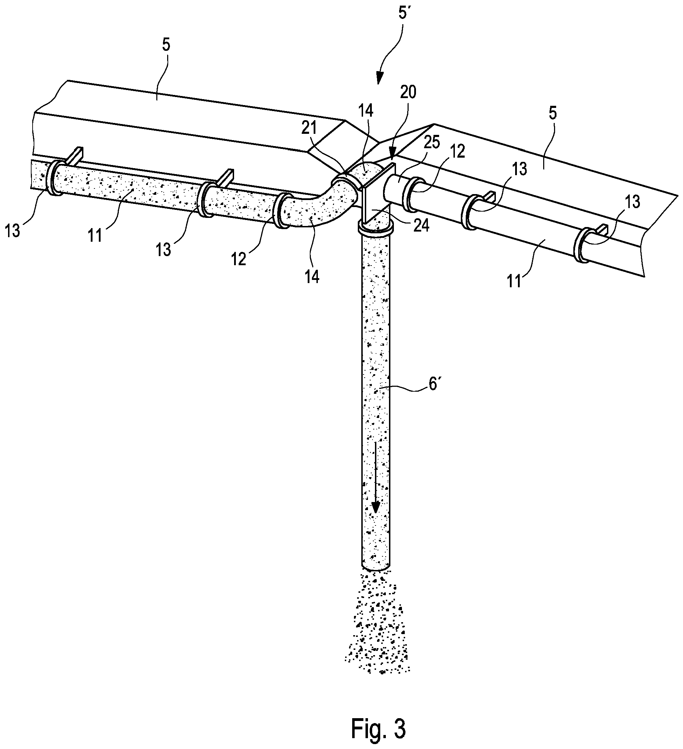

Die entsprechende Verwendung des Endschlauchhalters 20 ist in Figur 3 gezeigt.

Im letzten Gelenkbereich 5' vor der Spitze des Verteilermastes 2 ist zunächst der in Strömungsrichtung des Betons hintere Betonleitungsrohrbogen 14 durch entsprechendes Öffnen der Schalenkupplungen 12 entfernt und durch den Endschlauchhalter 20 ersetzt worden. Dazu ist der Endschlauchhalter 20 mit seinem Flansch 26 über eine der zuvor geöffneten Schalenkupplungen 12 mit dem Betonleitungssegment 11 am äußersten Arm 5 des Verteilermastes 2 verbunden und über seine Fußschalenkupplung 21 mit dem verbliebenden Betonleitungsrohrbogen 14 verbunden.

Als zweites, in der Fußschalenkupplung 21 gehaltenes Element ist der zuvor entnommene Betonleitungsrohrbogen 14 vorgesehen, der um eine mit der Schwenkachse der beiden Auslegerarme 5 dauerhaft kongruenten Achse verschwenkbar ist. An dem freien Ende dieses Betonleitungsrohrbogens 14 ist der zweite Endschlauch 6' befestigt - bspw. mithilfe der Schalenkupplung 12, die durch die Fußschalenkupplung 21 des Endschlauchhalters 20 ersetzt wurde.

## Patentansprüche

1. Betonpumpe (1) umfassend einen Verteilermast (2) mit mehreren jeweils relativ zueinander verschwenkbaren Auslegerarmen (5), an denen eine Betonförderleitung (10) entlanggeführt wird, wobei in den Gelenkbereichen (5') die Betonförderleitung (10) derart durch Betonleitungssegmente (14) gebildet ist, dass die Drehachse jeweils einer, die Betonleitungssegmente (14) verbindenden Schalenkupplung (12) senkrecht zur Längsachse der Auslegerarme (5) ausgerichtet ist, wobei in einem Gelenkbereich (5') ein Endschlauchhalter (20) für Verteilermasten (2) von Betonpumpen (1) zur Schaffung eines Anschlagpunktes für einen Endschlauch (6') angeordnet ist, **dadurch gekennzeichnet, dass** der Endschlauchhalter (20) eine mit ihrem Fuß (23) an einem Trägerelement (24) befestigte Fußschalenkupplung (21) zur Rohrdrehverbindung zweier Betonleitungssegmente (14) umfasst, wobei das Trägerelement (24) einen zur Kupplungsverbindung mit einem Betonleitungssegment (11) ausgebildeten Flansch (26) aufweist, dessen relative Lage gegenüber der Fußschalenkupplung (21) einem vorgegebenen Betonleitungssegment (14) entspricht, wobei die Fußschalenkupplung (21) die Schalenkupplung (12) mit senkrecht zur Längsachse der Auslegerarme (5) ausgerichteten Drehachse bildet und wobei der Flansch (26) mit einem Betonleitungssegment (11) an dem der Spitze des Verteilermastes (2) näherliegenden, den Gelenkbereich (5') mitbildenden Auslegerarm (5) verbunden ist.

2. Betonpumpe nach Anspruch 1,
**dadurch gekennzeichnet, dass**
das vorgegebene Betonleitungssegment (14) ein Betonleitungsrohrbogen (14), vorzugsweise mit einem Biegewinkel von 90° ist.

3. Betonpumpe nach einem der vorhergehenden Ansprüche,
**dadurch gekennzeichnet, dass**
die Fußschalenkupplung (21) und der Flansch (26) an Betonleitungssegmente (11, 14) mit einer Nennweite von (DN) 100 mm oder 125 mm angepasst sind.

4. Betonpumpe nach einem der vorhergehenden Ansprüche,
**dadurch gekennzeichnet, dass**
der Flansch (26) durch einen, vorzugsweise normierten, Anschweißbund (25) gebildet ist.

5. Betonpumpe nach Anspruch 4,
**dadurch gekennzeichnet, dass**
das Trägerelement (24) eine Trägerplatte ist, auf der Anschweißbund (25) und Fußschalenkupplung (21) unmittelbar befestigt sind.

6. Betonpumpe nach einem der vorhergehenden Ansprüche,
**dadurch gekennzeichnet, dass**
dasjenige Betonleitungssegment (14), welches durch den Endschlauchhalter (20) zeitweise ersetzt ist, mit seinem einen Ende an der Fußschalenkupplung (21) des Endschlauchhalters (20) befestigt und am anderen Ende mit einem Endschlauch (6') verbunden ist.

7. Betonpumpe nach einem der vorhergehenden Ansprüche,
**dadurch gekennzeichnet, dass**
der Endschlauchhalter (20) in dem Gelenkbereich (5') angeordnet ist, der durch den auch die Spitze des Verteilermastes (2) bildenden Auslegerarm (5) mitgebildet wird.

8. Verfahren zur Montage eines Endschlauchhalters (20) für Verteilermasten (2) von Betonpumpen (1) zur Schaffung eines Anschlagpunktes für einen Endschlauch (6') umfassend eine mit ihrem Fuß (23) an einem Trägerelement (24) befestigte Fußschalenkupplung (21) zur Rohrdrehverbindung zweier Betonleitungssegmente (14), wobei das Trägerelement (24) einen zur Kupplungsverbindung mit einem Betonleitungssegment (11) ausgebildeten Flansch (26) aufweist, dessen relative Lage gegenüber der Fußschalenkupplung (21) einem vorgegebenen Betonleitungssegment (14) entspricht, an einer Betonpumpe (1) zur Herstellung einer Betonpumpe (1) gemäß einem der vorhergehenden Ansprüche umfassend einen Verteilermast (2) mit mehreren jeweils relativ zueinander verschwenkbaren Auslegerarmen (5), an denen eine aus mehreren, über Schalenkupplungen (12) miteinander verbundenen Betonleitungssegmente (11, 14) gebildete Betonförderleitung (10) entlanggeführt ist, mit den Schritten:
- Lösen der Schalenkupplung (12) zu beiden Seiten des durch den Endschlauchhalter (20) zeitweise zu ersetzenden Betonleitungssegments (14) und Entfernen des Betonleitungssegments (14) sowie einer der beiden Schalenkupplungen (12); und
- Einsetzen des Endschlauchhalters (20), Verbinden des Endschlauchhalters (20) sowohl mit dem einen, zum entfernten Betonleitungssegments ursprünglich benachbarten Betonleitungssegment (14) über die Fußschalenkupplung (21) des Endschlauchhalters (20) als auch mit dem anderen, zum entfernten Betonleitungssegments ursprünglich benachbarten Betonleitungssegment (11) über den Flansch (26) des Endschlauchhalters (20) und der verbliebenen Schalenkupplung (12).

9. Verfahren nach Anspruch 8,
**dadurch gekennzeichnet, dass**
an der Fußschalenkupplung (21) des Endschlauchhalters (20) das zuvor entfernte Betonleitungssegment befestigt wird, an dessen anderem Ende vorzugsweise ein Endschlauch (6') befestigt wird.

10. Verfahren nach einem der Ansprüche 8 oder 9,
**dadurch gekennzeichnet, dass**
der Endschlauchhalter (20) in dem Gelenkbereich (5') angeordnet wird, der durch den auch die Spitze des Verteilermastes (2) bildenden Auslegerarm (5) mitgebildet wird.

## Claims

1. Concrete pump (1) comprising a distributor boom (2) with a plurality of boom arms (5) which can each be pivoted relative to one other and along which a concrete delivery line (10) is guided, wherein the concrete delivery line (10) is formed, in the joint regions (5'), by concrete line segments (14) in such a way that the axis of rotation of a respective shell coupling (12) connecting the concrete line segments (14) is oriented perpendicularly with respect to the longitudinal axis of the boom arms (5), wherein an end hose holder (20) for distributor masts (2) of concrete pumps (1) is arranged in a joint region (5') for the provision of an attachment point for an end hose (6'), **characterized in that** the end hose holder (20) comprises a foot shell coupling (21), which is fastened by way of its foot (23) to a support element (24), for the rotary pipe connection of two concrete line segments (14), wherein the support element (24) has a flange (26) which is configured for coupling connection to a concrete line segment (11), the relative position of said flange in relation to the foot shell coupling (21) corresponds to a predetermined concrete line segment (14), wherein the foot shell coupling (21) forms the shell coupling (12) with axis of rotation oriented perpendicularly with respect to the longitudinal axis of the boom arms (5), and wherein the flange (26) is connected to a concrete line segment (11) on the boom arm (5) which is closer to the tip of the distributor boom (2) and which concomitantly forms the joint region (5').

2. Concrete pump according to Claim 1,
**characterized in that**
the predetermined concrete line segment (14) is a concrete line pipe bend (14), preferably with a bending angle of 90°.

3. Concrete pump according to either of the preceding claims,
**characterized in that**
the foot shell coupling (21) and the flange (26) are adapted to concrete line segments (11, 14) with a nominal diameter of (DN) 100 mm or 125 mm.

4. Concrete pump according to one of the preceding claims,
**characterized in that**
the flange (26) is formed by a, preferably standardized, weld-on collar (25).

5. Concrete pump according to Claim 4,
**characterized in that**
the support element (24) is a support plate on which the weld-on collar (25) and the foot shell coupling (21) are fastened directly.

6. Concrete pump according to one of the preceding claims,
**characterized in that**
that concrete line segment (14) which is temporarily replaced by the end hose holder (20) is fastened, at one end thereof, to the foot shell coupling (21) of the end hose holder (20) and is connected, at the other end, to an end hose (6').

7. Concrete pump according to one of the preceding claims,
**characterized in that**
the end hose holder (20) is arranged in the joint region (5') which is concomitantly formed by the boom arm (5) which also forms the tip of the distributor boom (2).

8. Method for assembling an end hose holder (20) for distributor masts (2) of concrete pumps (1) for the provision of an attachment point for an end hose (6'), said end hose holder comprising a foot shell coupling (21), which is fastened by way of its foot (23) to a support element (24), for the rotary pipe connection of two concrete line segments (14), wherein the support element (24) has a flange (26) which is configured for coupling connection to a concrete line segment (11), the relative position of said flange in relation to the foot shell coupling (21) corresponds to a predetermined concrete line segment (14), on a concrete pump (1) so as to produce a concrete pump (1) according to one of the preceding claims comprising a distributor boom (2) with a plurality of boom arms (5) which can each be pivoted relative to one another and along which a concrete delivery line (10), formed of a plurality of concrete line segments (11, 14) which are connected to one another via shell couplings (12), is guided, comprising the following steps:
- unfastening the shell coupling (12) on both sides of the concrete line segment (14) to be temporarily replaced by the end hose holder (20) and removing the concrete line segment (14) and one of the two shell couplings (12); and
- inserting the end hose holder (20), connecting the end hose holder (20) both to the one concrete line segment (14), which was originally adjacent to the removed concrete line segment, via the foot shell coupling (21) of the end hose holder (20) and to the other concrete line segment (11), which was originally adjacent to the removed concrete line segment, via the flange (26) of the end hose holder (20) and the remaining shell coupling (12).

9. Method according to Claim 8,
**characterized in that**
the previously removed concrete line segment is fastened to the foot shell coupling (21) of the end hose holder (20), at the other end of which line segment an end hose (6') is preferably fastened.

10. Method according to either of Claims 8 and 9,
**characterized in that**
the end hose holder (20) is arranged in the joint region (5') which is concomitantly formed by the boom arm (5) which also forms the tip of the distributor boom (2).

## Revendications

1. Pompe à béton (1) comprenant une flèche de distribution (2) avec une pluralité de bras (5) aptes à pivoter les uns par rapport aux autres, le long desquels est guidée une conduite (10) de transport de béton, la conduite (10) de transport de béton, dans les zones d'articulation (5'}, étant formée par des segments (14) de conduite de béton de telle sorte que l'axe de rotation d'un raccord à coquille (12) reliant les segments (14) de conduite de béton soit orienté perpendiculairement à l'axe longitudinal des bras (5),
un support de tuyau d'extrémité (20) pour des flèches de distribution (2) de pompes à béton (1) étant agencé dans une zone d'articulation (5') pour créer un point de butée pour un tuyau d'extrémité (6'),
**caractérisée en ce que** le support de tuyau d'extrémité (20) comprend un raccord à coquille (21) à pied, fixé par son pied (23) à un élément de support (24) pour le raccordement rotatif de deux segments (14) de conduite de béton, l'élément de support (24) présentant une bride (26) conçue pour une liaison d'accouplement avec un segment (11) de conduite de béton, dont la position relative par rapport au raccord à coquille (21) à pied correspond à un segment (14) de conduite de béton prédéfini,
le raccord à coquille (21) à pied formant le raccord à coquille (12) avec un axe de rotation orienté perpendiculairement à l'axe longitudinal des bras de flèche (5), et la bride (26) étant reliée à un segment (11) de conduite de béton sur le bras de flèche (5) le plus proche de la pointe de la flèche de distribution (2) et formant également la zone d'articulation (5').

2. Pompe à béton selon la revendication 1,
**caractérisée en ce que**
le segment (14) de conduite de béton prédéterminé est un coude (14) de conduite de béton, de préférence avec un angle de courbure de 90°.

3. Pompe à béton selon l'une des revendications précédentes,
**caractérisée en ce que**
le raccord à coquille (21) à pied et la bride (26) sont adaptés à des segments (11, 14) de conduite de béton d'un diamètre nominal de (DN) 100 mm ou 125 mm.

4. Pompe à béton selon l'une des revendications précédentes,
**caractérisée en ce que**
la bride (26) est formée par une collerette (25) à souder, de préférence normalisée.

5. Pompe à béton selon la revendication 4,
**caractérisée en ce que**
l'élément de support (24) est une plaque de support sur laquelle la collerette (25) à souder et le raccord à coquille (21) à pied sont directement fixés.

6. Pompe à béton selon l'une des revendications précédentes,
**caractérisée en ce que**
le segment (14) de conduite de béton qui est remplacé temporairement par le support de tuyau d'extrémité (20) est fixé par l'une de ses extrémités au raccord à coquille (21) à pied du support de tuyau d'extrémité (20) et est relié à un tuyau d'extrémité (6') à l'extrémité latérale.

7. Pompe à béton selon l'une des revendications précédentes,
**caractérisée en ce que**
le support de tuyau d'extrémité (20) est disposé dans la zone d'articulation (5') formée par le bras de flèche (5) qui constitue également le sommet de la flèche de distribution (2).

8. Procédé de montage d'un support de tuyau d'extrémité (20) pour des flèches de distribution (2) de pompes à béton (1) pour la création d'un point de butée pour un tuyau d'extrémité (6'), comprenant un raccord à coquille (21) ayant un pied, fixé par son pied (23) à un élément de support (24) pour la liaison par rotation de tuyaux de deux segments (14) de conduite de béton, l'élément de support (24) présentant une bride (26) conçue pour un accouplement de liaison avec un segment (11) de conduite de béton, dont la position relative par rapport au raccord à coquille (21) à pied correspond à un segment (14) de conduite de béton prédéfini, sur une pompe à béton (1) pour la fabrication d'une pompe à béton (1) selon l'une des revendications précédentes, comprenant une flèche de distribution (2) avec une pluralité de bras de flèche (5) dont chacun est apte à pivoter par rapport aux autres, le long desquels est guidée une conduite (10) de transport de béton formée de plusieurs segments (11, 14) de conduite de béton reliés entre eux par des raccords à coquilles (12), comprenant les étapes suivantes :
- desserrage du raccord à coquilles (12) des deux côtés du segment (14) de conduite de béton à remplacer temporairement par le support de tuyau d'extrémité (20) et retirer le segment (14) de conduite de béton ainsi que l'un des deux raccords à coquilles (12) ; et
- mise en place du support de tuyau d'extrémité (20), liaison du support de tuyau d'extrémité (20) à la fois avec l'un des segments (14) de conduite de béton initialement adjacents au segment de conduite de béton retiré, par l'intermédiaire du raccord à coquille (21) à pied du support de tuyau d'extrémité (20), et avec l'autre segment (11) de conduite de béton initialement adjacent au segment de conduite de béton retiré, par l'intermédiaire de la bride (26) du support de tuyau d'extrémité (20) et du raccord à coquille (12) restant.

9. Procédé selon la revendication 8,
**caractérisé en ce que**
le segment de conduite de béton préalablement retiré est fixé au raccord à coquille (21) à pied du support de tuyau d'extrémité (20), et un tuyau d'extrémité (6') est de préférence fixé à l'autre extrémité de ce segment.

10. Procédé selon l'une des revendications 8 ou 9,
**caractérisé en ce que**
le support de tuyau d'extrémité (20) est agencé dans la zone d'articulation (5') formée par le bras de flèche (5) qui constitue également le sommet de la flèche de distribution (2).
